(19) Europäisches Patentamt / European Patent Office / Office européen des brevets

(11) **EP 4 640 635 A1**

(12) **EUROPEAN PATENT APPLICATION**
published in accordance with Art. 153(4) EPC

(43) Date of publication:
    **29.10.2025 Bulletin 2025/44**

(51) International Patent Classification (IPC):
    *C01G 53/00* (2025.01)    *H01M 4/505* (2010.01)
    *H01M 4/525* (2010.01)

(21) Application number: 23906572.5

(22) Date of filing: 21.11.2023

(52) Cooperative Patent Classification (CPC):
    C01G 53/00; H01M 4/505; H01M 4/525;
    Y02E 60/10

(86) International application number:
    **PCT/JP2023/041791**

(87) International publication number:
    **WO 2024/135203 (27.06.2024 Gazette 2024/26)**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **KH MA MD TN**

(30) Priority: 22.12.2022 JP 2022205622

(71) Applicant: Sumitomo Chemical Company, Limited
    Tokyo 103-6020 (JP)

(72) Inventors:
    • TACHIBANA Shingo
      Niihama-shi, Ehime 792-8521 (JP)
    • MATSUO Yoji
      Niihama-shi, Ehime 792-8521 (JP)

(74) Representative: **Vossius & Partner
    Patentanwälte Rechtsanwälte mbB
    Siebertstrasse 3
    81675 München (DE)**

(54) **LITHIUM-METAL COMPLEX OXIDE, POSITIVE ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(57) Provided are a lithium metal composite oxide, a positive electrode active material for a lithium secondary battery, a positive electrode for a lithium secondary battery and a lithium secondary battery that are capable of improving the initial discharge capacity and the cycle characteristics of a lithium secondary battery. The lithium metal composite oxide has a layered structure, and satisfies conditions (1), (2) and (3).

FIG. 1

EP 4 640 635 A1

**Description**

[Technical Field]

The present invention relates to a lithium metal composite oxide, a positive electrode active material for a lithium secondary battery, a positive electrode for a lithium secondary battery, and a lithium secondary battery.
Priority is claimed on Japanese Patent Application No. 2022-205622, filed December 22, 2022, the content of which is incorporated herein by reference.

[Background Art]

Lithium metal composite oxides are used as the positive electrode active material for lithium secondary batteries. Much investigation has been conducted, for example, into controlling the crystal structure of lithium metal composite oxides with the aim of improving the performance of lithium secondary batteries.
It is well known that a phenomenon called cation mixing occurs during the production stage of lithium metal composite oxides, or during the charging and discharging stages of lithium secondary batteries.
Cation mixing is a phenomenon in which nickel ions migrate to sites in the crystal structure of a lithium metal composite oxide that should be occupied by lithium ions, resulting in the replacement of lithium ions with nickel ions. When cation mixing occurs, capacity is lost from the lithium secondary battery, meaning battery performance tends to deteriorate.
Accordingly, much investigation is being conducted into techniques to reduce the proportion of cation mixing in lithium metal composite oxides.
For example, Patent Document 1 discloses a hexagonal lithium nickel composite oxide having a layered structure in which the Li site occupancy of the Li-rich layer is 95% or higher.

[Citation List]

[Patent Document]

[Patent Document 1] JP-A-2010-64944

[Summary of Invention]

[Technical Problem]

As the potential fields of application for lithium secondary batteries continue to expand, further improvements in the initial discharge capacity and cycle characteristics would be desirable.
The present invention has been developed in light of the above circumstances, and has the objects of providing a lithium metal composite oxide, a positive electrode active material for a lithium secondary battery, a positive electrode for a lithium secondary battery and a lithium secondary battery that are capable of improving the initial discharge capacity and the cycle characteristics of a lithium secondary battery.

[Solution to Problem]

The present invention includes the following [1] to [9].

[1] A lithium metal composite oxide having a layered structure, and satisfying (1), (2) and (3) shown below.

(1) Represented by compositional formula (I) shown below.

$$\mathrm{Li[Li_m(Ni_{(1-x-y)}Co_xM_y)_{1-m}]O_2} \; \dots \qquad \text{compositional formula (I)}$$

(In the compositional formula (I), M represents one or more elements selected from the group consisting of Mn, Fe, Cu, Ti, Mg, Ca, Al, Zn, Sn, Zr, B, Si, Nb, W, Ta, Ba, S and P, and the compositional formula (I) satisfies $-0.1 \leq m \leq 0.2$, $0 \leq x \leq 0.5$, $0 < y < 0.7$, and $x+y<1$.)
(2) The Me site occupancy at Li sites of the layered rock salt crystal structure, determined by Rietveld analysis, is at least 2.0% but not more than 7.0%.
(3)

$$0.45 \leq (I_B + I_C)/I_A \leq 0.70$$

(In powder X-ray diffraction measurements using CuK$\alpha$ radiation, $I_A$ is the integrated intensity of a diffraction peak that exists within a range of $2\theta = 35.5 \pm 1°$, $I_B$ is the integrated intensity of the lower angle peak of two diffraction peaks that exist within a range of $2\theta = 38.0 \pm 1°$, and Ic is the integrated intensity of the higher angle peak of the two diffraction peaks.)

[2] The lithium metal composite oxide according to [1], wherein the compositional formula (I) satisfies $0 \leq x \leq 0.1$.

[3] The lithium metal composite oxide according to [1] or [2], having a $D_{50}$ value obtained from a volume-based cumulative particle size distribution curve measured using a laser diffraction and scattering method of at least 3 $\mu$m but not more than 20 $\mu$m.

[4] The lithium metal composite oxide according to any one of [1] to [3], which satisfies (4) shown below.

$$(4)\ 0.8 \leq I_D/I_E \leq 1.8$$

(In powder X-ray diffraction measurements using CuK$\alpha$ radiation, $I_D$ is the integrated intensity of a diffraction peak that exists within a range of $2\theta = 18.5 + 1°$, and $I_E$ is the integrated intensity of a diffraction peak that exists within a range of $2\theta = 44.5 + 1°$.)

[5] The lithium metal composite oxide according to any one of [1] to [4], wherein the average crystallite size, calculated by Rietveld analysis of the powder X-ray diffraction pattern in a range of $2\theta = 10°$ to $90°$ obtained by powder X-ray diffraction measurement, is at least 80 nm but not more than 200 nm.

[6] The lithium metal composite oxide according to any one of [1] to [5], having a BET specific surface area of at least 0.2 m$^2$/g but not more than 2.0 m$^2$/g.

[7] A positive electrode active material for a lithium secondary battery containing the lithium metal composite oxide according to any one of [1] to [6].

[8] A positive electrode for a lithium secondary battery containing the positive electrode active material for a lithium secondary battery according to [7].

[9] A lithium secondary battery containing the positive electrode for a lithium secondary battery according to [8].

[Advantageous Effects of Invention]

The present invention is able to provide a lithium metal composite oxide, a positive electrode active material for a lithium secondary battery, a positive electrode for a lithium secondary battery, and a lithium secondary battery that are capable of improving the initial discharge capacity and the cycle characteristics of a lithium secondary battery.

[Brief Description of Drawings]

FIG. 1 is a schematic diagram for describing the volume change of a lithium metal composite oxide.
FIG. 2 is a schematic diagram for describing the volume change of a lithium metal composite oxide.
FIG. 3 is a schematic structural diagram illustrating one example of a lithium secondary battery.
FIG. 4 is a schematic structural diagram illustrating one example of an all-solid-state lithium secondary battery.

[Description of Embodiments]

Definitions of terminology used in this description are as follows.
A metal composite compound may also be abbreviated as "MCC" in the following description.
A lithium metal composite oxide may also be abbreviated as "LiMO" in the following description.
A positive electrode active material for a lithium secondary battery may be abbreviated as "CAM" in the following description.
The term "Ni" indicates not standalone nickel metal, but rather the Ni element. This also applies to references to other elements such as Co and Li.
A numerical range described, for example, as "5 to 15 $\mu$m" means a numerical range from at least 5 $\mu$m to not more than 15 $\mu$m, including the lower limit value of 5 $\mu$m and the upper limit value of 15 $\mu$m.
The term "lithium secondary battery" means a lithium ion secondary battery.
For numerical ranges in this description, the lower limit value and upper limit value may be combined as appropriate. Numerical ranges for the various physical properties, the composition, and the production conditions may also be combined as appropriate.

In this description, the cycle characteristics are evaluated using the discharge capacity retention rate.

In this description, the methods used for measuring the initial discharge capacity and the discharge capacity retention rate are as follows.

[Methods for Measuring Initial Discharge Capacity and Discharge Capacity Retention Rate]

A positive electrode for a lithium secondary battery and a lithium secondary battery are produced using the methods described below, and the initial discharge capacity and the discharge capacity retention rate are then measured.

<Production of Positive Electrode for Lithium Secondary Battery>

Using the LiMO as the CAM, the CAM, a conductive material (acetylene black) and a binder (PVdF) are kneaded together in a mass ratio of CAM : conductive material : binder = 92:5:3 (mass ratio) to prepare a paste-like positive electrode mixture. During preparation of this positive electrode mixture, N-methyl-2-pyrrolidone is used as an organic solvent.

The thus obtained positive electrode mixture is applied to a current collector formed from an Al foil with a thickness of 40 $\mu$m and then dried under vacuum at 150°V for 8 hours to obtain a positive electrode for a lithium secondary battery. The surface area of this positive electrode for a lithium secondary battery is 1.65 cm$^2$.

<Production of Lithium Secondary Battery>

The operations below are conducted in a glovebox under an argon atmosphere.

The positive electrode for a lithium secondary battery produced as described above is placed within the lower lid of a part for a coin-shaped battery R2032 (manufactured by Hohsen Corporation) with the aluminum foil surface facing downward, and a separator (thickness: 25 $\mu$m) composed of a porous film of polyethylene is then placed on top of the positive electrode. Next, 300 $\mu$l of an electrolyte solution is injected into the lower lid. The electrolyte solution used is a solution prepared by dissolving 1 mol/l of $LiPF_6$ in a mixed solution containing ethylene carbonate, dimethyl carbonate and ethyl methyl carbonate in a ratio of 30:35:35 (volumetric ratio).

Next, using metallic lithium as the negative electrode, the negative electrode is placed on top of the separator, the upper lid is fitted via a gasket, and the assembly is sealed with a caulking machine to complete production of the coin lithium secondary battery (coin half cell R2032).

The assembled lithium secondary battery is left to stand at room temperature for 12 hours to allow the electrolyte solution to adequately impregnate the separator and the positive electrode mixture layer.

At a test temperature of 25°C, and using a set current of 0.2 CA for both charging and discharging, constant current constant voltage charging and constant current discharging are conducted. The maximum charge voltage is set to 4.3 V, and the minimum discharge voltage is set to 2.5 V. The discharge capacity is measured, and the obtained value is deemed the "initial discharge capacity" (mAh/g).

In this description, a "high initial discharge capacity" means an initial discharge capacity measured using the method described above of 180 mAh/g or higher.

Subsequently, at a test temperature of 25°C, constant current constant voltage charging and constant current discharging are repeated under the conditions described below. Fifty repetitions of the charge/discharge cycle are conducted.

Charging: current setting: 0.5 CA, maximum voltage: 4.3 V, constant voltage constant current charging
Discharging: battery setting 1 CA, minimum voltage: 2.5 V, constant current discharging

Based on the discharge capacity of the first cycle and the discharge capacity of the 50th cycle, the discharge capacity retention rate is calculated using the following formula. A higher discharge capacity retention rate means the capacity of the battery is less likely to deteriorate after repeated charging and discharging, indicating superior cycle characteristics.

Discharge capacity retention rate (%) = discharge capacity of 50th cycle (mAh/g) / discharge capacity of 1st cycle (mAh/g) $\times$ 100

In this description, the expression "favorable cycle characteristics" means a discharge capacity retention rate measured using the above method of 80% or higher.

<LiMO>

<<Crystal Structure>>

The LiMO has a layered structure.

A "layered structure" is a crystal structure in which lithium layers and transition metal layers other than lithium are layered alternately with layers of oxygen sandwiched between the metal layers. The transition metal layers are composed of transition metal ions, and the layers of oxygen are composed of oxygen ions. A typical layered rock salt crystal structure is an $\alpha$-NaFe$_2$O$_2$ type crystal structure.

[Method for Confirming Crystal Structure]

The crystal structure of the LiMO can be confirmed by observation using a powder X-ray diffraction measurement device.

An X-ray diffraction device such as Ultima IV manufactured by Rigaku Corporation can be used for the powder X-ray diffraction measurement.

The LiMO is more preferably a hexagonal crystal structure or a monoclinic crystal structure.

Hexagonal crystal structures belong to one space group selected from the group consisting of P3, P31, P32, R3, P-3, R-3, P312, P321, P3112, P3121, P3212, P3221, R32, P3m1, P31m, P3c1, P31c, R3m, R3c, P-31m, P-31c, P-3m1, P-3c1, R-3m, R-3c, P6, P61, P65, P62, P64, P63, P-6, P6/m, P63/m, P622, P6122, P6522, P6222, P6422, P6322, P6mm, P6cc, P63cm, P63mc, P-6m2, P-6c2, P-62m, P-62c, P6/mmm, P6/mcc, P63/mcm and P63/mme.

Further, monoclinic crystal structures belong to one space group selected from the group consisting of P2, P21, C2, Pm, Pc, Cm, Cc, P2/m, P21/m, C2/m, P2/c, P21/c and C2/c.

Among these space groups, in order to obtain a lithium secondary battery having a high initial discharge capacity, a hexagonal crystal structure belonging to the space group R-3m, or a monoclinic crystal structure belonging to the space group C2/m is particularly desirable.

The LiMO satisfies (1), (2) and (3) described below.

(1) Represented by compositional formula (I) shown below.

$$Li[Li_m(Ni_{(1-x-y)}Co_xM_y)_{1-m}]O_2 \ldots \qquad \text{compositional formula (I)}$$

(In the compositional formula (I), M represents one or more elements selected from the group consisting of Mn, Fe, Cu, Ti, Mg, Ca, Al, Zn, Sn, Zr, B, Si, Nb, W, Ta, Ba, S and P, and the compositional formula (I) satisfies $-0.1 \leq m \leq 0.2$, $0 \leq x \leq 0.5$, $0 < y \leq 0.7$, and $x+y<1$.)

(2) The Me site occupancy at Li sites of the layered rock salt crystal structure, determined by Rietveld analysis, is at least 2.0% but not more than 7.0%.

(3)

$$0.45 \leq (I_B + I_C)/I_A \leq 0.70$$

(In powder X-ray diffraction measurements using CuK$\alpha$ radiation, $I_A$ is the integrated intensity of a diffraction peak that exists within a range of $2\theta = 35.5 \pm 1°$, $I_B$ is the integrated intensity of the lower angle peak of two diffraction peaks that exist within a range of $2\theta = 38.0 \pm 1°$, and $I_C$ is the integrated intensity of the higher angle peak of the two diffraction peaks.)

<<Composition>>

The LiMO is represented by the above compositional formula (I).

(m)

From the viewpoint of improving the cycle characteristics, m is preferably at least -0.08, more preferably at least -0.06, and particularly preferably -0.04 or greater. Further, from the viewpoint of obtaining a lithium secondary battery with a high initial discharge capacity, m is preferably not more than 0.1, more preferably not more than 0.08, and particularly preferably 0.05 or less.

For example, m may satisfy -0.08≤m≤0.1, -0.06≤m≤0.08, or -0.04≤m≤0.05.

(x)

Cation mixing occurs particularly readily in LiMO structures in which the proportion of Co is low. Accordingly, in order to obtain a LiMO that satisfies (2) above, x is preferably not more than 0.5, more preferably not more than 0.2, particularly preferably not more than 0.1, and still more preferably 0.05 or less. The lower limit for x is, for example, zero.
For example, x may satisfy 0≤x≤0.2, 0≤x≤0.1, or 0≤x≤0.05. From the viewpoint of improving the initial discharge capacity and the cycle characteristics, the compositional formula (I) preferably satisfies 0≤x≤0.1.

(y)

From the viewpoint of improving the cycle characteristics, y is preferably at least 0.0002, and more preferably 0.0005 or greater. Further, y is preferably not more than 0.5, more preferably not more than 0.3, and particularly preferably 0.10 or less.
For example, y may satisfy 0.0002≤y≤0.5, 0.0005≤y≤0.3, or 0.0002≤y≤0.10.
The compositional formula (I) preferably satisfies 0.0002≤y≤0.10.
The value of x+y exceeds 0. Further, from the viewpoint of obtaining a lithium secondary battery with a high initial discharge capacity, x+y is preferably not more than 0.5, more preferably not more than 0.25, particularly preferably not more than 0.2, and still more preferably 0.1 or less.
For example, x+y may satisfy 0<x+y≤0.5, 0<x+y≤0.25, 0<x+y≤0.2, or 0<x+y≤0.1.
From the viewpoint of improving the cycle characteristics and the initial discharge capacity, M is preferably one or more elements selected from the group consisting of Mn, Ti, Mg, Ca, Al, Zr, B, Si, Nb and W.
The LiMO preferably contains Li, Ni, and one or more elements M1 selected from the group consisting of Mn and Al, and is more preferably represented by compositional formula (I') shown below.

$$Li[Li_m(Ni_{(1-x-y)}Co_xM1_zM2_w)_{1-m}]O_2 \ ... \qquad \text{compositional formula (I')}$$

(In the compositional formula (I'), M1 represents one or more elements selected from the group consisting of Mn and Al, M2 represents one or more elements selected from the group consisting of Fe, Cu, Ti, Mg, Ca, Zn, Sn, Zr, B, Si, Nb, W, Ta, Ba, S and P, the ranges for m and x are the same as those described for m and x in the above compositional formula (I), and the range for z+w is the same as the range for y in the above compositional formula (I).)

[Compositional Analysis]

Compositional analysis of the LiMO can be conducted by dissolving the obtained LiMO powder in hydrochloric acid, and then conducting measurements using an ICP emission spectrophotometer.
For example, an SPS3000 apparatus manufactured by SII NanoTechnology Inc. can be used as the ICP emission spectrophotometer.

<<Me Site Occupancy>>

The LiMO satisfies (2) described above. The Me site occupancy is preferably at least 2.1%, and more preferably 2.2% or higher. The Me site occupancy indicates the abundance ratio of metal elements other than Li (for example, Ni, Co, and the elements exemplified for M in compositional formula (I)) within the lithium layers (Li sites) of the layered structure.
Provided the Me site occupancy is at least as large as the above lower limit, the amount of volume change upon repeated charging and discharging can be kept small. As a result, the cycle characteristics can be improved.
Further, the Me site occupancy is preferably not more than 6.8%, and more preferably 6.5% or lower.
Provided the Me site occupancy is not more than the above upper limit, any increase in resistance can be suppressed, and deterioration in the initial discharge capacity can also be suppressed. Furthermore, structural degradation during charging and discharging reactions caused by excessive increases in the resistance can be suppressed, enabling the cycle characteristics to be improved.
The Me site occupancy is, for example, within a range from 2.1 to 6.8%, or from 2.2 to 6.5%.

[Method for Measuring Me Site Occupancy]

The Me site occupancy can be calculated by Rietveld analysis of the powder X-ray diffraction pattern obtained from powder X-ray diffraction measurements. Rietveld analysis is a technique for comparing the powder X-ray diffraction pattern from actual measurements with a simulation pattern from the crystal structure model, and then optimizing crystal structure parameters in the crystal structure model to minimize differences between the two patterns.

The powder X-ray diffraction measurements are conducted using an X-ray diffraction apparatus. For example, the D8 Advance manufactured by Bruker Corporation may be used. More specifically, a powder of the LiMO is used to fill a special substrate, and $CuK\alpha$ radiation is used to conduct measurements under conditions including a diffraction angle $2\theta = 10$ to $90°$ and a sampling width of $0.02°$, thus obtaining a powder X-ray diffraction pattern. The thus obtained powder X-ray diffraction pattern is subjected to Rietveld analysis. TOPAS ver. 4.2 from Bruker Corporation is used as the Rietveld analysis software. For this Rietveld analysis, a layered rock salt crystal structure $(Li_{1-n}Me_n)(Me_{1-n}Li_n)O_2$ is used as the initial crystal structure model, and an optimization is then performed for the Me site occupancy n at the Li sites.

$<<I_A, I_B$ and $I_C>>$

The LiMO satisfies (3) described above.

[Method for Acquiring $I_A$, $I_B$ and Ic]

In a powder X-ray diffraction measurement using $CuK\alpha$ radiation, the LiMO has a diffraction peak A within a range of $2\theta = 35.5 \pm 1°$, and has two diffraction peaks within a range of $2\theta = 38.0 \pm 1°$. These two diffraction peaks refer to the peak having the highest intensity, and the peak having the next highest intensity. Of these two peaks, the lower angle peak is deemed peak B, and the higher angle peak is deemed peak C.

The areas of the mountain-shaped portions formed between a line connecting the lowermost points on the left and right sides of the diffraction peak A and the curve of the peak A, between a line connecting the lowermost points on the left and right sides of the diffraction peak B and the curve of the peak B, and between a line connecting the lowermost points on the left and right sides of the diffraction peak C and the curve of the peak C, namely the integrated intensities, are termed $I_A$, $I_B$ and Ic respectively.

The values of $I_A$, $I_B$ and Ic are calculated from the powder X-ray diffraction pattern obtained in the above section entitled "Method for Measuring Me Site Occupancy" using integrated powder X-ray analysis software. DIFFRAC.EVA from Bruker Corporation is used as the powder X-ray diffraction analysis software.

The value of $(I_B+I_C)/I_A$ is preferably at least 0.46, more preferably at least 0.48, and particularly preferably 0.50 or greater. Further, the value of $(I_B+I_C)/I_A$ is preferably not more than 0.69, more preferably not more than 0.67, and particularly preferably 0.65 or less.

The LiMO preferably satisfies one of the following (3)-1 to (3)-3.

$$(3)\text{-}1: 0.46 \leq (I_B+I_C)/I_A \leq 0.69$$

$$(3)\text{-}2: 0.48 \leq (I_B+I_C)/I_A \leq 0.67$$

$$(3)\text{-}3: 0.50 \leq (I_B+I_C)/I_A \leq 0.65$$

The peak A is the peak corresponding with the (101) plane, the peak B is the peak corresponding with the (006) plane, and the peak C is the peak corresponding with the (012) plane.

When the conditions (1), (2) and (3) described above are satisfied, the initial discharge capacity of the lithium secondary battery is high, and the cycle characteristics also improve. The reasons for these effects are thought to include the following.

Volume change of the LiMO that occurs upon repeated charging and discharging is one factor that causes a deterioration in the cycle characteristics of the lithium secondary battery. If a LiMO that exhibits a large volume change is used as the CAM, cracks may occur in the CAM during cycling, and side reactions can then occur on the new surfaces created by the cracks, resulting in gas generation and the formation of a resistance layer. Furthermore, regions having poor contact with the conductive assistant tend to develop. These factors cause a deterioration in the electron conductivity and the conductivity of the lithium ions, and an increase in the resistance. As a result, the cycle characteristics deteriorate.

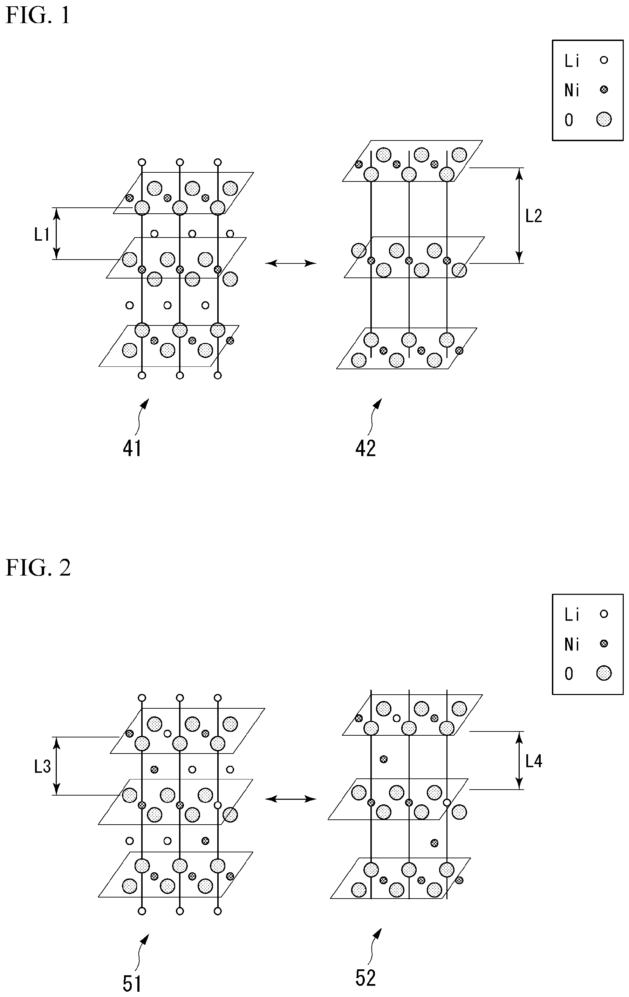

This volume change is described using the schematic drawing of a LiMO illustrated in FIG. 1. In FIG. 1, LiMO41 illustrates the state when lithium ions have been inserted (corresponding to the state prior to charging or during discharge of the battery), and LiMO42 illustrates the state following desorption of the lithium ions (corresponding to the state following charging of the battery).

FIG. 1 illustrates the desorption of lithium ions from the LiMO41 and the change to the LiMO42 upon charging.

When the lithium ions are removed, the negatively charged oxygen ions repel each other. As a result, the interlayer gap between the transition metal layers expands, and the volume increases. In other words, the interlayer gap expands from L1 to L2, and the volume increases.

In LiMO41, cation mixing either does not occur, or the rate of cation mixing is low. Accordingly, when a lithium site becomes vacant as a result of charging, the repulsion between oxygen ions is not cancelled, and the interlayer gap between the transition metal layers tends to expand readily.

During discharging, lithium ions are inserted, and the LiMO42 changes to LiMO41. In this case, the interlayer gap narrows from L2 to L1 and the volume decreases. The larger the difference between L2 and L1, the greater the amount of volume change upon repeated charging and discharging, causing a deterioration in the cycle characteristics.

FIG. 2 is a schematic diagram for describing the volume change of the LiMO of an embodiment of the present invention that has cation mixing. In FIG. 2, LiMO51 illustrates the state when lithium ions have been inserted (corresponding to the state prior to charging or during discharge of the battery), and LiMO52 illustrates the state following desorption of the lithium ions (corresponding to the state following charging of the battery). Upon charging, lithium ions undergo desorption from the LiMO51, causing a change to LiMO52. During discharging, lithium ions are inserted, and the LiMO52 changes to LiMO51.

In LiMO51, a portion of the lithium sites have been replaced with nickel ions, and therefore even when the lithium ions are removed due to charging, the nickel ions remain within some of the lithium sites. These remaining nickel ions moderate the repulsion between oxygen ions, and therefore the interlayer gap between transition metal layers is less likely to expand. In other words, although the interlayer gap expands from L3 to L4, because the difference is small, the volume is less likely to increase. As a result, the cycle characteristics are less likely to deteriorate.

Typically, if cation mixing is large, then a rock salt structure is more likely to form. Rock salt structures are electrochemically inactive, and therefore develop resistance upon the desorption and insertion of lithium ions. If this resistance is high, then the initial discharge capacity tends to decrease, and structural degradation during the charging and discharging reactions tend to impair the cycle characteristics. On the other hand, if there is too little rock salt structure, rapid structural degradation and volume change are more likely to occur during the charging and discharging reactions, meaning the cycle characteristics are prone to deterioration. In the LiMO of an embodiment of the present invention, the existence of an appropriate amount of rock salt structure means a high initial discharge capacity and improved cycle characteristics can be achieved.

It is surmised that because the LiMO of this embodiment of the present invention exhibits only a small amount of volume change upon repeated charging and discharging in order to satisfy the above condition (2), and includes an appropriate amount of rock salt structure in order to satisfy the above condition (3), the initial discharge capacity is high, and the cycle characteristics are less likely to deteriorate.

The $D_{50}$ value for the LiMO is preferably at least 3 $\mu$m, more preferably at least 8 $\mu$m, and particularly preferably 10 $\mu$m or greater. Further, $D_{50}$ is preferably not more than 20 $\mu$m, more preferably not more than 18 $\mu$m, and particularly preferably 17 $\mu$m or less. For example, the $D_{50}$ value may be within a range from 3 to 20 $\mu$m, from 8 to 18 $\mu$m, or from 10 to 17 $\mu$m.

The $D_{50}$ value is the 50% cumulative volume particle size ($\mu$m) obtained from a volume-based cumulative particle size distribution curve measured using a laser diffraction and scattering method.

A LiMO having a $D_{50}$ value that satisfies the above range is easier to pack during production of the positive electrode and exhibits favorable contact with the conductive assistant, enabling production of a positive electrode with a high initial discharge capacity.

[Method for Measuring $D_{50}$]

The $D_{50}$ value for the LiMO can be measured using the following laser diffraction and scattering method.

Specifically, 2 g of the powdered LiMO is first placed in 50 ml of a 0.2% by mass aqueous solution of sodium hexametaphosphate, yielding a dispersion containing the dispersed LiMO.

Subsequently, the particle size distribution of the obtained dispersion is measured using a laser diffraction particle size distribution analyzer, thus obtaining a volume-based cumulative particle size distribution curve. In this obtained cumulative particle size distribution curve, the particle size value at the point where the cumulative volume reaches 50% from the fine particle side is $D_{50}$ ($\mu$m).

For example, an MS2000 analyzer manufactured by Malvern Instruments Inc. can be used as the laser diffraction particle size distribution analyzer.

The LiMO preferably also satisfies (4) described below.

$$(4)\ 0.8 \leq I_D/I_E \leq 1.8$$

(In powder X-ray diffraction measurements using CuK$\alpha$ radiation, $I_D$ is the integrated intensity of a diffraction peak that exists within a range of $2\theta = 18.5 \pm 1°$, and $I_E$ is the integrated intensity of a diffraction peak that exists within a range of $2\theta = 44.5 \pm 1°$.)

[Method for Acquiring $I_D$ and $I_E$]

In a powder X-ray diffraction measurement using CuK$\alpha$ radiation, the LiMO has a diffraction peak D within a range of $2\theta = 18.5 \pm 1°$, and has a diffraction peak E within a range of $2\theta = 44.5 \pm 1°$C. The areas of the mountain-shaped portions formed between a line connecting the lowermost points on the left and right sides of the diffraction peak D and the curve of the peak D, and between a line connecting the lowermost points on the left and right sides of the diffraction peak E and the curve of the peak E, namely the integrated intensities, are termed $I_D$ and $I_E$ respectively.

The peak D is the peak corresponding with the (003) plane, and the peak E is the peak corresponding with the (104) plane.

The values of $I_D$ and $I_E$ are calculated from the powder X-ray diffraction pattern obtained in the above section entitled "Method for Measuring Me Site Occupancy" using integrated powder X-ray analysis software. DIFFRAC.EVA from Bruker Corporation is used as the powder X-ray diffraction analysis software.

The value of $I_D/I_E$ is preferably at least 0.9, and more preferably 1.0 or greater. It is thought that a LiMO for which the value of $I_D/I_E$ is at least as large as this lower limit has a more developed crystal structure in the layer direction relative to the plane direction in the layered structure, and therefore the initial discharge capacity tends to improve.

The value of $I_D/I_E$ is preferably not more than 1.7, and more preferably 1.5 or less. A LiMO for which the value of $I_D/I_E$ is not more than this upper limit does not have excessive development of crystal structures in the layer direction in the layered structure, and therefore volume change in the layer direction during charge/discharge cycling is suppressed, and the cycle characteristics tend to improve.

For example, $I_D/I_E$ may satisfy (4)-1 or (4)-2 shown below.

$$(4)\text{-}1: 0.9 \leq I_D/I_E \leq 1.7$$

$$(4)\text{-}2: 1.0 \leq I_D/I_E \leq 1.5$$

The average crystallite size of the LiMO is preferably within a range from 80 to 200 nm.

[Method for Measuring Average Crystallite Size]

The average crystallite size is calculated by conducting Rietveld analysis of the powder X-ray diffraction pattern with a range from $2\theta = 10°$ to $90°$ obtained in the above section entitled "Method for Measuring Me Site Occupancy".

The average crystallite size is preferably at least 85 nm, and more preferably 90 nm or greater. A LiMO having an average crystallite size at least as large as the above lower limit exhibits superior crystallinity. Such a LiMO has few lattice defects and little grain boundary resistance, and therefore the desorption and insertion of lithium ions proceeds smoothly, and the initial discharge capacity tends to improve.

The average crystallite size is preferably not more than 170 nm, and more preferably 150 nm or less. A LiMO with an average crystallite size no greater than this upper limit does not have excessive growth of the crystallites, which tends to reduce the diffusion resistance of lithium ions within the crystal structure and improve the initial discharge capacity.

The average crystallite size is, for example, within a range from 85 to 170 nm, or from 90 to 150 nm.

The BET specific surface area of the LiMO is preferably at least 0.2 m$^2$/g, and more preferably 0.3 m$^2$/g or greater. The BET specific surface area is preferably not more than 2.0 m$^2$/g, and more preferably 1.9 m$^2$/g or less. The BET specific surface area is, for example, within a range from 0.2 to 2.0 m$^2$/g, or from 0.3 to 1.9 m$^2$/g.

When a LiMO having a BET specific surface area at least as large as the above lower limit is used, the contact area between the LiMO and the electrolyte solution increases, and the initial discharge capacity tends to increase.

When a LiMO having a BET specific surface area no greater than the above upper limit is used, the contact area between the LiMO and the electrolyte solution increases, gas generation caused by decomposition of the electrolyte solution can be more easily suppressed, and the cycle characteristics tend to improve.

[Method for Measuring BET Specific Surface Area]

The BET specific surface area of the LiMO or a metal composite hydroxide described below can be measured using a BET specific surface area measurement device. For example, a Macsorb (a registered trademark) device manufactured by Mountech Co., Ltd. can be used as the BET specific surface area measurement device. The LiMO or metal composite hydroxide is preferably dried at 105° for 30 minutes in a nitrogen atmosphere as a pretreatment prior to measurement.

<Method for Producing LiMO>

The method for producing the LiMO preferably includes a step of obtaining an MCC, and a step of obtaining the LiMO. The step of obtaining an MCC and the step of obtaining the LiMO are described below in this order.

[Step of Obtaining MCC]

First, an MCC is prepared that contains Ni and one or more elements selected from the group consisting of Co and the element M. The element M represents one or more elements selected from the group consisting of Mn, Fe, Cu, Ti, Mg, Ca, Al, Zn, Sn, Zr, B, Si, Nb, W, Ta, Ba, S, and P.
The MCC can be produced by a batch co-precipitation method or a continuous co-precipitation method. The production method will be described below in detail using, as an example, a metal composite oxide containing Ni and the element M.
First, a nickel salt solution, a metal salt solution containing the element M, and if necessary a complexing agent are reacted using a coprecipitation method, in particular the continuous coprecipitation method disclosed in JP-A-2002-201028, thus producing a metal composite hydroxide represented by $Ni_{(1-y)}M_y(OH)_2$ (wherein y is the same as y in the above compositional formula (I)).
Examples of nickel salts that may be used as the solute of the nickel salt solution include at least one salt from among nickel sulfate, nickel nitrate, nickel chloride and nickel acetate.
Examples of the metal salt that represents the solute of the metal salt solution containing the element M include sulfates, chlorides, acetates and hydroxides of the element M.
For example, manganese salts that may be used as the solute of the manganese salt solution include at least one salt from among manganese sulfate, manganese nitrate and manganese chloride.
Examples of aluminum salts that may be used as the solute of the aluminum salt solution include aluminum sulfate and sodium aluminate.
The metal salts described above are used in a ratio that corresponds with the compositional ratio of the above $Ni_{(1-y)}M_y(OH)_2$. Water is used as the solvent.
The complexing agent is a compound that is capable of forming a complex with Ni and ions of the element M in an aqueous solution. Examples of the complexing agent include ammonium ion donors, hydrazine, ethylenediaminetetraacetic acid, nitrilotriacetic acid, uracildiacetic acid, and glycine.
Examples of the ammonium ion donors include ammonium salts such as ammonium hydroxide, ammonium sulfate, ammonium chloride, ammonium carbonate and ammonium fluoride.
A complexing agent need not be included. In those cases where a complexing agent is included, the amount of the complexing agent included in the mixed solution containing the nickel salt solution, the metal salt solution containing the element M2, and the complexing agent, for example expressed as a molar ratio of the amount of the complexing agent relative to the total number of moles of the nickel salt and the metal salts, is greater than 0 but not more than 2.0.
During the co-precipitation method, in order to adjust the pH value of the above mixed solution, an alkaline aqueous solution is added to the mixed solution before the pH of the mixed solution changes from alkaline to neutral. Examples of alkaline aqueous solutions that may be used include a sodium hydroxide aqueous solution or a potassium hydroxide aqueous solution.
In this description, the pH value is defined as the value measured when the temperature of the mixed solution is 40°C. In those cases where the temperature of the mixed solution sampled from the reaction tank is higher or lower than 40°C, the pH is measured following heating or cooling of the mixed solution to 40°C.
During the reaction, the temperature of the reaction tank is controlled, for example, within a range from 20 to 80°C, and preferably from 30 to 70°C.
Further, during the reaction, the pH value of the solution inside the reaction tank is controlled, for example, within a range from 9 to less than 12, and preferably from 10 to less than 12.
The materials inside the reaction tank are stirred appropriately and mixed.
In order to enable separation of the formed reaction precipitate, an overflow type reaction tank may be used as the reaction tank used in the continuous coprecipitation method.
In order to achieve the desired atmosphere inside the reaction tank, a prescribed gas may be passed through the reaction tank or bubbled directly through the liquid inside the reaction tank.
Following the above reaction, the obtained reaction precipitate is washed with water and then dried to obtain a metal composite hydroxide. Further, in those cases where simply washing with water results in residues from the mixed solution being retained in the reaction precipitate, if necessary, the reaction precipitate may also be washed with a weak acid solution or an alkaline solution containing sodium hydroxide or potassium hydroxide.

Following drying, the reaction precipitate may be subjected to appropriate classification.

The BET specific surface area of the metal composite hydroxide is preferably within a range from 10 to 40 $m^2$/g, and more preferably from 14 to 30 $m^2$/g.

The BET specific surface area of the metal composite hydroxide can be adjusted by altering the pH value inside the reaction tank during production.

The obtained metal composite hydroxide is then oxidized (oxidation step) to obtain the metal composite oxide MCC.

The oxidation temperature preferably uses a maximum holding temperature within a range from 500 to 800°C, and more preferably from 550 to 750°C.

The oxidation time is preferably within a range from 1 to 10 hours, and more preferably from 2 to 6 hours. The oxidation time indicates the total time from the start of the temperature increase until the maximum holding temperature has been reached and the temperature then starts to be reduced.

The gas flow rate per unit time in the oxidation step is preferably adjusted within an appropriate range. The gas flow rate in the oxidation step is preferably within a range from 0.5 to 10.0 L/minute, and more preferably from 1.0 to 5.0 L/minute.

The total volume of gas (units: $m^3$) supplied in the oxidation step relative to the BET specific surface area (units: $m^2$/g) of the metal composite oxide preferably satisfies (A) shown below.

$$0.08 \text{ m} \cdot \text{g} \leq \text{total volume of gas supplied in oxidation step / BET specific surface area of metal composite oxide} \leq 0.12 \text{ m} \cdot \text{g} \qquad \text{(A)}$$

In this description, the total volume of gas supplied in the oxidation step means the total volume of gas supplied in the oxidation step from the start of the temperature increase until the maximum holding temperature has been reached and the temperature then starts to be reduced. This total volume of gas can be calculated from the gas flow rate per unit of time and the oxidation time.

By controlling the oxidation temperature, the oxidation time and the gas flow rate within the respective ranges described above, and oxidizing the metal composite hydroxide under conditions that satisfy (A) above, carbonate ions and the like in the MCC can be removed, and the MCC can be formed in a state without excessive formation of rock salt structures. Then, in the subsequent step, when the MCC and a lithium compound are mixed together and calcined, the layered structure develops adequately while cation mixing is controlled within an appropriate range, enabling a LiMO that satisfies conditions (2) and (3) described above to be produced.

In the oxidation step, the rate of temperature increase used while reaching the maximum holding temperature is preferably at least 80°C/hour, more preferably at least 100°C/hour, and particularly preferably 120°C/hour or greater.

In this description, the expression "maximum holding temperature" means the maximum temperature at which the atmosphere inside the oxidation device or calcining furnace (hereinafter also jointly referred to as the "calcining device") is held during the oxidation step or the subsequent calcining step (hereinafter also jointly referred to as the "heating step"). In those cases where the oxidation or calcining is conducted over multiple stages, the "maximum holding temperature" means the maximum temperature, in the heating step, during the stage in which the oxidation or calcining is conducted at the highest holding temperature.

In this description, the rate of temperature increase is calculated from the time in the heating device from the point where the temperature increase is started until the maximum holding temperature is reached, and the temperature difference in the heating device between the temperature when the temperature increase is started and the maximum holding temperature.

Either oxygen or air (a normal atmosphere) may be used as the atmospheric gas during the oxidation.

In addition to controlling the conditions described above, various gases including inert gases such as nitrogen, argon and carbon dioxide, oxidizing gases such as air and oxygen, or mixed gases thereof, may be supplied to the reaction tank to control the oxidation state of the obtained reaction product.

Furthermore, oxidizing agents including peroxides such as hydrogen peroxide, peroxide salts such as permanganate salts, perchlorate salts, hypochlorite salts, nitric acid, halogens, and ozone may also be used.

The obtained MCC may be classified as appropriate.

[Step of Obtaining LiMO]

The step of obtaining the LiMO includes a mixing step of mixing the MCC and a lithium compound, and a calcining step of calcining the resulting mixture.

- Mixing Step

The MCC and a lithium compound are mixed.

The lithium compound may use at least one of lithium carbonate, lithium nitrate, lithium acetate, lithium hydroxide, lithium hydroxide hydrate, lithium oxide, lithium chloride, and lithium fluoride. Among these, any one of lithium hydroxide, lithium hydroxide hydrate and lithium carbonate is preferred.

The lithium compound and the MCC are mixed with due consideration of the compositional ratio of the final target product to obtain a mixture containing the lithium compound and the MCC. The amount (molar ratio) of Li relative to a value of 1 representing the total amount of elements other than oxygen in the MCC (for example, Ni, Co and the element M) is preferably within a range from 0.90 to 1.10, more preferably from 0.91 to 1.10, and even more preferably from 0.92 to 1.10.

By mixing the lithium compound and the MCC in a ratio satisfying the above range, a sufficient amount of lithium ions is provided relative to the MCC, and the number of locations in the layered structure of the obtained LiMO that are deficient in lithium ions is reduced, making it easier to obtain a LiMO that satisfies the above conditions (1) and (3). Furthermore, by mixing the lithium compound and the MCC in a ratio satisfying the above range, the $D_{50}$ value, the value of $I_D/I_E$, and the average crystallite size for the LiMO can be adjusted to values within the respective ranges described above.

- Calcining Step

The thus obtained mixture is then calcined. Calcining of the mixture causes growth of crystals of the LiMO. During the calcining process, dry air, an oxygen atmosphere, or an inert atmosphere or the like is used depending on the desired composition. In this embodiment of the present invention, calcining in an oxygen atmosphere is preferred.

The calcining step may include only one calcining, or may include a plurality of calcining stages. In those cases where a plurality of calcining stages are conducted, the step that involves calcining at the highest temperature is deemed the main calcining. A preliminary calcining at a temperature lower than that of the main calcining may be conducted prior to the main calcining. Further a post-calcining at a temperature lower than that of the main calcining may be conducted following the main calcining.

In one embodiment of the present invention, it is preferable that a preliminary calcining is conducted first, and the main calcining is then conducted thereafter. Further, both the preliminary calcining and the main calcining are preferably conducted under an oxygen atmosphere.

The calcining temperature during the preliminary calcining is preferably within a range from 600 to 900°C, more preferably from 610 to 850°C, and even more preferably at least 620°C but less than 700°C. Provided the calcining temperature is at least as high as the lower limit of the above range, a LiMO having a strong crystal structure can be obtained. Furthermore, provided the calcining temperature is no higher than the upper limit of the above range, the volatilization of lithium ions from the surfaces of the LiMO particles can be reduced.

The calcining temperature during the main calcining is preferably within a range from 600 to 900°C, more preferably from 650 to 850°C, and even more preferably from 700 to 820°C. Provided the calcining temperature is at least as high as the lower limit of the above range, a LiMO having a strong crystal structure can be obtained. Furthermore, provided the calcining temperature is no higher than the upper limit of the above range, excessive cation mixing does not occur, and a LiMO that satisfies the above conditions (1) and (3) can be obtained.

The holding times for the preliminary calcining and main calcining are preferably each within a range from 1 to 50 hours, and more preferably from 2 to 20 hours. Provided the holding times in the calcining are not longer than the upper limit of the above range, volatilization of the lithium ions is suppressed, and any deterioration in the battery performance is inhibited. Provided the holding times in the calcining are at least as long as the lower limit of the above range, crystal development is promoted, and any deterioration in the battery performance is suppressed.

In this description, the "calcining temperature" describes the temperature of the atmosphere inside the calcining furnace, and means the maximum holding temperature.

In the calcining step, the rate of temperature increase used to reach the maximum holding temperature is preferably at least 80°C/hour, more preferably at least 100°C/hour, and particularly preferably 150°C/hour or faster.

The calcining uses a static calcining furnace or a flow-type calcining furnace. Examples of static calcining furnaces include tunnel furnaces and roller hearth kilns. Examples of the flow-type calcining furnaces include rotary kilns.

By adjusting the calcining conditions described above, the values for the BET specific surface area, $D_{50}$, $I_D/I_E$, and the average crystallite size for the LiMO can be adjusted.

- Washing Step

In one embodiment of the present invention, the calcined product obtained following calcining is preferably washed with a washing liquid such as pure water or an alkaline washing solution.

Examples of the alkaline washing solution include an aqueous solution of one or more anhydrides selected from the group consisting of lithium hydroxide, sodium hydroxide, potassium hydroxide, lithium carbonate, sodium carbonate, potassium carbonate and ammonium carbonate, and an aqueous solution of one or more hydrates of these anhydrides. Further, ammonia can also be used as the alkaline washing solution.

In the washing step, examples of methods that may be used for bringing the washing liquid and the calcined product into contact include methods in which the calcined product is placed in any of various washing liquids and stirred, methods in which any of various washing liquids is sprayed onto the calcined product as a shower, methods in which the calcined product is placed in the washing liquid and stirred, the calcined product is then separated from the washing liquid, and any of various washing liquids is then sprayed onto the separated calcined product as a shower.

The temperature of the washing liquid used in the washing step is preferably not more than 15°C, more preferably not more than 10°C, and even more preferably 8°C or lower. By controlling the temperature of the washing liquid to a value within this range, excessive elution of lithium ions from the crystal structure of the calcined product into the washing liquid during washing can be suppressed.

Following washing, the calcined product may be suitably dried. The drying temperature is, for example, within a range from 150 to 300°C.

Performing the steps described above yields the LiMO.

<Positive Electrode Active Material for Lithium Secondary Battery>

The CAM of an embodiment of the present invention contains the LiMO produced using the method described above. The amount of the LiMO relative to the total mass of the CAM (100% by mass) is preferably within a range from 70 to 99% by mass, and more preferably from 80 to 98% by mass.

The amount of the LiMO relative to the total mass of the CAM is determined using an SEM (for example, JSM-5510 manufactured by JEOL Ltd.), by irradiating the CAM with an electron beam at an accelerating voltage of 20 kV and performing SEM observation. The magnification of the SEM photograph is adjusted so that 200 to 400 of the target CAM particles are visible in the SEM photograph. In one example, the magnification may be within a range from 1,000× to 30,000×.

<Lithium Secondary Battery>

A positive electrode for a lithium secondary battery suitable for the case where the CAM described above is used is described below. Hereinafter, the positive electrode for the lithium secondary battery may sometimes be referred to as simply the positive electrode.

Moreover, a lithium secondary battery that represents an ideal application of the positive electrode is also described.

One example of a lithium secondary battery suitable for the case where the CAM of an embodiment of the present invention is used includes a positive electrode and a negative electrode, a separator sandwiched between the positive electrode and the negative electrode, and an electrolyte solution located between the positive electrode and the negative electrode.

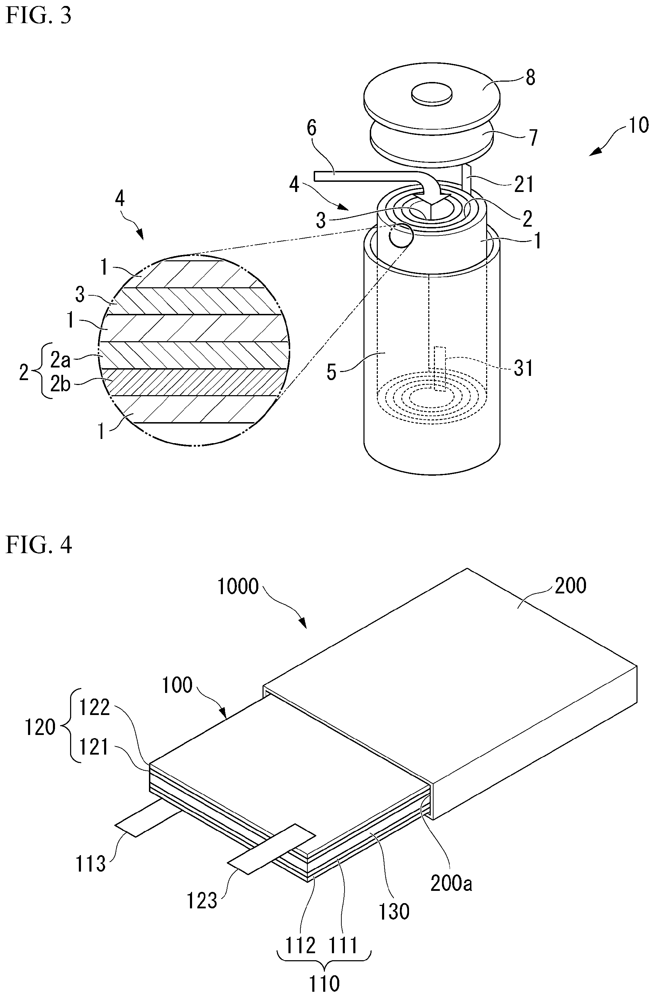

FIG. 3 is a schematic diagram illustrating one example of a lithium secondary battery. For example, a cylindrical lithium secondary battery 10 is produced in the following manner.

First, as illustrated in the partially enlarged view of FIG. 3, a pair of strip-shaped separators 1, a strip-shaped positive electrode 2 having a positive electrode lead 21 at one end, and a strip-shaped negative electrode 3 having a negative electrode lead 31 at one end are stacked in the order of separator 1, positive electrode 2, separator 1, negative electrode 3, and this stacked structure is then wound to form an electrode group 4.

The positive electrode 2 has, in one example, a positive electrode active material layer 2a containing the CAM and a positive electrode current collector 2b on one surface of which the positive electrode active material layer 2a is formed. This type of positive electrode 2 can be produced by first preparing a positive electrode mixture containing the CAM, a conductive material and a binder, and then supporting this positive electrode mixture on one surface of the positive electrode current collector 2b to form the positive electrode active material layer 2a.

Examples of the negative electrode 3 include an electrode in which a negative electrode mixture containing a negative electrode active material (not shown in the drawing) is supported on a negative electrode current collector, and an electrode formed solely from a standalone negative electrode active material. This negative electrode 3 can be produced in the same manner as the positive electrode 2.

Subsequently, the electrode group 4 and an insulator (not shown in the drawing) are housed in the battery can 5, the bottom of the can is sealed, and the electrode group 4 is impregnated with an electrolyte solution 6, thereby disposing the electrolyte between the positive electrode 2 and the negative electrode 3. Production of the lithium secondary battery 10 can then be completed by subsequently sealing the top of the battery can 5 with a top insulator 7 and a sealing body 8.

Examples of the shape of the electrode group 4 include columnar shapes which, when cut perpendicularly to the winding axis of the electrode group 4, have a cross-sectional shape that is circular, elliptical, rectangular, or rectangular with rounded corners.

Further, the shape of the lithium secondary battery having this type of electrode group 4 may employ any shape prescribed in IEC 60086, a standard for batteries established by the International Electrotechnical Commission (IEC), or any shape prescribed in JIS C 8500. Examples of these shapes include cylindrical shapes and rectangular shapes.

Moreover, the lithium secondary battery is not limited to the wound configuration described above, and may also have a laminated configuration in which a laminated structure of a positive electrode, a separator, a negative electrode and a separator is stacked in a repeating arrangement. Examples of such laminated lithium secondary batteries include so-called coin batteries, button batteries, and paper (or sheet) batteries.

The positive electrode, separator, negative electrode and electrolyte solution that constitute the lithium secondary battery may, for example, use the configurations, materials and production methods disclosed in paragraphs [0113] to [0140] of WO2022/113904A1.

<All-Solid-State Lithium Secondary Battery>

The CAM of an embodiment of the present invention can also be used as the CAM of an all-solid-state lithium secondary battery.

FIG. 4 is a schematic diagram illustrating one example of an all-solid-state lithium secondary battery. The all-solid-state lithium secondary battery 1000 illustrated in FIG. 4 contains a laminate 100 having a positive electrode 110, a negative electrode 120 and a solid electrolyte layer 130, and an external case 200 that houses the laminate 100. Further, the all-solid-state lithium secondary battery 1000 may also have a bipolar structure in which a CAM and a negative electrode active material are disposed on the two sides of a current collector. One specific example of a bipolar structure is the structure disclosed in JP-A-2004-95400.

The positive electrode 110 has a positive electrode active material layer 111 and a positive electrode current collector 112. The positive electrode active material layer 111 contains the CAM described above and the solid electrolyte. Further, the positive electrode active material layer 111 may also contain a conductive material and a binder.

The negative electrode 120 has a negative electrode active material layer 121 and a negative electrode current collector 122. The negative electrode active material layer 121 contains a negative electrode active material. Further, the negative electrode active material layer 121 may also contain a solid electrolyte and a conductive material.

The laminate 100 may have an external terminal 113 connected to the positive electrode current collector 112 and an external terminal 123 connected to the negative electrode current collector 122. In addition, the all-solid-state lithium secondary battery 1000 may have a separator between the positive electrode 110 and the negative electrode 120.

The all-solid-state lithium secondary battery 1000 also has an insulator (not shown in the drawing) that insulates the laminate 100 from the external case 200, and a sealing body (not shown in the drawing) that seals the opening 200a of the external case 200.

A container molded from a metal material with superior corrosion resistance such as aluminum, stainless steel, or nickel-plated steel may be used as the external case 200. Alternatively, a container formed from a laminate film that has been subjected to a corrosion resistance treatment on at least one surface and then processed into a bag shape may also be used as the external case 200.

Examples of the shape of the all-solid-state lithium secondary battery 1000 include coin-type, button-type, paper (or sheet-type), cylindrical, square, and laminate-type (pouch-type) batteries.

The all-solid-state lithium secondary battery 1000 is illustrated using a configuration having a single laminate 100 as one example, but embodiments of the present invention are not limited to this particular configuration. The all-solid-state lithium secondary battery 1000 may also have a configuration in which the laminate 100 acts as a unit cell, and a plurality of these unit cells (laminates 100) are housed inside the exterior case 200.

The all-solid-state lithium secondary battery may, for example, use the configurations, materials and production methods disclosed in paragraphs [0151] to [0181] of WO2022/113904A1.

In lithium secondary batteries having the types of structures described above, because the LiMO described above is used, a CAM can be provided that enables improvements in the initial discharge capacity and the cycle characteristics. Further, because the LiMO described above is used as the CAM, a positive electrode can be provided that enables improvements in the initial discharge capacity and the cycle characteristics.

Furthermore, because the LiMO described above is used as the CAM, a lithium secondary battery with improved initial discharge capacity and cycle characteristics can be provided.

[Examples]

The present invention is described below in further detail using a series of examples.

<Measurements of Various Parameters>

Measurements of the crystal structures and various parameters of the LiMO produced using the methods described below were conducted as described above in the sections entitled [Method for Confirming Crystal Structure], [Method for Measuring Me Site Occupancy], [Compositional Analysis], [Method For Measuring $D_{50}$], [Method for Acquiring $I_A$, $I_B$ and $I_C$], [Method for Acquiring $I_D$ and $I_E$], [Method For Measuring BET Specific Surface Area], and [Method for Measuring Average Crystallite Size]. BET specific surface area values for the metal composite hydroxides produced using the methods described below were also measured in accordance with the above section entitled [Method For Measuring BET Specific Surface Area].

<Methods for Measuring Initial Discharge Capacity and Discharge Capacity Retention Rate>

The initial discharge capacity and the discharge capacity retention rate of each lithium secondary battery were measured using the methods described above in the section entitled [Methods for Measuring Initial Discharge Capacity and Discharge Capacity Retention Rate].

<Example 1>

A reaction tank fitted with a stirrer and an overflow pipe was charged with water, an aqueous sodium hydroxide solution was then added, and the liquid temperature (temperature of the reaction tank) was held at 70°C.
A mixed raw material solution 1 was prepared by mixing an aqueous solution of nickel sulfate, an aqueous solution of manganese sulfate, and an aqueous solution of aluminum sulfate in amounts that yielded a molar ratio of Ni:Mn:Al of 93:3.5:3.5.
The mixed raw material solution 1 and an aqueous solution of ammonium sulfate as a complexing agent were added continuously to the reaction tank under a stream of nitrogen and under constant stirring. An aqueous solution of sodium hydroxide was then added dropwise at a suitable time to adjust the pH of the solution inside the reaction tank to 10.7 (measurement temperature: 40°C), thus obtaining a reaction precipitate 1.
The reaction precipitate 1 was washed using a mass of a 5% by mass aqueous solution of sodium hydroxide that was 20 times the mass of the reaction precipitate 1. Following washing, the precipitate was dewatered using a centrifuge, washed with water, dewatered again, isolated, and dried at 105°C for 20 hours, yielding a metal composite hydroxide 1 containing Ni, Mn, and Al. The BET specific surface area of the metal composite hydroxide 1 was 19.1 $m^2$/g.
The metal composite hydroxide 1 was oxidized under the conditions shown in Table 1 to obtain a metal composite oxide MCC1. In Table 1, [Total volume of gas / BET specific surface area] represents the total volume of gas supplied in the oxidation step relative to the BET specific surface area of the metal composite hydroxide. Atmospheric air was used as the gas during oxidation.
Sufficient lithium hydroxide monohydrate was weighed to provide a ratio (molar ratio) of the amount of Li relative to a value of 1 for the total amount of Ni, Mn and Al contained in the MCC1 of 1.05. The MCC-1 and the lithium hydroxide monohydrate were then mixed to obtain a mixture 1.
Subsequently, the obtained mixture 1 was subjected to preliminary calcining under an oxygen atmosphere at 650°C for 5 hours. A main calcining was then conducted under an oxygen atmosphere at 750°C for 5 hours, yielding a powdered calcined product 1.
A slurry was prepared by mixing the calcined product 1 with pure water that had been adjusted to a liquid temperature of 5°C in a ratio that yielded a concentration of the calcined product 1 of 0.5% by mass relative to the total mass, and the slurry was stirred for 20 minutes. Subsequently, the slurry was dried at 210°C for 10 hours under a nitrogen atmosphere, yielding a LiMO1 having a layered structure.

<Example 2>

A mixed raw material solution 2 was prepared by mixing an aqueous solution of nickel sulfate, an aqueous solution of manganese sulfate, and an aqueous solution of aluminum sulfate in amounts that yielded a molar ratio of Ni:Mn:Al of 93.0:1.0:6.0.
With the exception of using this mixed raw material solution 2, the same method as Example 1 was used to obtain a metal composite hydroxide 2 containing Ni, Mn and Al. The BET specific surface area of the metal composite hydroxide 2 was 19.4 $m^2$/g.
The metal composite hydroxide 2 was oxidized under the conditions shown in Table 1 to obtain a metal composite oxide MCC2. Atmospheric air was used as the gas during oxidation.
With the exception of using the MCC2, a LiMO2 having a layered structure was obtained in the same manner as Example 1.

<Example 3>

A mixed raw material solution 3 was prepared by mixing an aqueous solution of nickel sulfate, an aqueous solution of manganese sulfate, an aqueous solution of aluminum sulfate, and an aqueous solution of cobalt sulfate in amounts that yielded a molar ratio of Ni:Mn:Al:Co of 91.2:3.4:3.4:2.0.

With the exception of using this mixed raw material solution 3, the same method as Example 1 was used to obtain a metal composite hydroxide 3 containing Ni, Mn, Al and Co. The BET specific surface area of the metal composite hydroxide 3 was 16.7 m$^2$/g.

The metal composite hydroxide 3 was oxidized under the conditions shown in Table 1 to obtain a metal composite oxide MCC3. Atmospheric air was used as the gas during oxidation.

With the exception of using the MCC3, a LiMO3 having a layered structure was obtained in the same manner as Example 1.

<Comparative Example 1>

The metal composite hydroxide 1 obtained in Example 1 was oxidized under the conditions shown in Table 1 to obtain a metal composite oxide MCC4. Atmospheric air was used as the gas during oxidation.

The same operations as Example 1 were conducted using the MCC4, and a powdered LiMO4 was obtained. The LiMO4 had a layered structure.

<Comparative Example 2>

With the exception of adding the aqueous solution of sodium hydroxide dropwise with appropriate timing under conditions that yielded a pH for the mixed solution in the reaction tank of 12.2 (measurement temperature: 40°C), a metal composite hydroxide 5 was obtained in the same manner as Example 1. The BET specific surface area of the metal composite hydroxide 5 was 47.3 m$^2$/g.

The metal composite hydroxide 5 was oxidized under the conditions shown in Table 1 to obtain a metal composite oxide MCC5. Atmospheric air was used as the gas during oxidation.

The same operations as Example 1 were conducted using the MCC5, and a powdered LiMO5 was obtained. The LiMO5 had a layered structure.

<Comparative Example 3>

With the exception of not oxidizing the metal composite hydroxide 2, the same operations as Example 2 were conducted, yielding a powdered LiMO6. The LiMO6 had a layered structure.

<Comparative Example 4>

The metal composite hydroxide 1 obtained in Example 1 was oxidized under the conditions shown in Table 1 to obtain a metal composite oxide MCC7. Atmospheric air was used as the gas during oxidation.

The same operations as Example 1 were conducted using the MCC7, and a powdered LiMO7 was obtained. The LiMO7 had a layered structure.

<Comparative Example 5>

A mixed raw material solution 8 was prepared by mixing an aqueous solution of nickel sulfate, an aqueous solution of manganese sulfate, and an aqueous solution of aluminum sulfate in amounts that yielded a molar ratio of Ni:Mn:Al:Co of 93.0:6.0:1.0.

The mixed raw material solution 8 and an aqueous solution of ammonium sulfate as a complexing agent were added continuously to the reaction tank under a stream of nitrogen and under constant stirring. An aqueous solution of sodium hydroxide was then added dropwise at a suitable time to adjust the pH of the mixed solution inside the reaction tank to 10.9 (measurement temperature: 40°C), thus obtaining a reaction precipitate 8. With the exception of using this reaction precipitate 8, a metal composite hydroxide 8 was obtained in the same manner as Example 1. The BET specific surface area of the metal composite hydroxide 8 was 13.1 m$^2$/g.

The metal composite hydroxide 4 was oxidized under the conditions shown in Table 1 to obtain a metal composite oxide MCC8. Atmospheric air was used as the gas during oxidation.

The same operations as Example 1 were conducted using the MCC8, and a powdered LiMO8 was obtained. The LiMO8 had a layered structure.

Various parameters of the LiMO1 to LiMO8 samples obtained in Examples 1 to 3 and Comparative Examples 1 to 5 are shown in Table 2. Lithium secondary batteries were produced using each of the obtained LiMO1 to LiMO8 as the CAM, and the initial discharge capacity and the discharge capacity retention rate were measured. The results are shown in Table 2.

[Table 1]

|  | Gas flow rate | Total volume of gas / BET specific surface area | Oxidation temperature | Oxidation time |
|---|---|---|---|---|
|  | L/minute | m·g | °C | hours |
| Example 1 | 3.0 | 0.09 | 650 | 5 |
| Example 2 | 3.0 | 0.09 | 650 | 5 |
| Example 3 | 3.0 | 0.11 | 650 | 5 |
| Comparative Example 1 | 3.0 | 0.07 | 900 | 5 |
| Comparative Example 2 | 3.0 | 0.04 | 650 | 5 |
| Comparative Example 3 | - | - | - | - |
| Comparative Example 4 | 3.0 | 0.05 | 300 | 5 |
| Comparative Example 5 | 3.0 | 0.16 | 900 | 5 |

[Table 2]

| | m | x | y | M | Me site occupancy | $D_{50}$ | $(I_B+I_C)/I_A$ | $I_D/I_E$ | Average crystallite size | BET specific surface area | Initial discharge capacity | Discharge capacity retention rate |
|---|---|---|---|---|---|---|---|---|---|---|---|---|
| | | | | | % | μm | | | nm | m²/g | mAh/g | % |
| Example 1 | -0.03 | 0.00 | 0.07 | Mn, Al | 5.0 | 13.5 | 0.69 | 1.1 | 98 | 1.4 | 198 | 81 |
| Example 2 | -0.03 | 0.00 | 0.06 | Mn, Al | 2.4 | 13.4 | 0.57 | 1.2 | 119 | 0.9 | 202 | 88 |
| Example 3 | 0.00 | 0.02 | 0.07 | Mn, Al | 3.7 | 13.6 | 0.53 | 1.2 | 121 | 1.2 | 202 | 83 |
| Comparative Example 1 | -0.03 | 0.00 | 0.07 | Mn, Al | 7.3 | 15.4 | 0.62 | 1.0 | 77 | 0.6 | 166 | 70 |
| Comparative Example 2 | -0.01 | 0.00 | 0.07 | Mn, Al | 4.2 | 16.2 | 0.71 | 1.2 | 102 | 1.0 | 191 | 77 |
| Comparative Example 3 | 0.00 | 0.00 | 0.05 | Mn, Al | 1.2 | 13.0 | 0.58 | 1.1 | 110 | 1.0 | 192 | 79 |
| Comparative Example 4 | -0.03 | 0.00 | 0.07 | Mn, Al | 4.5 | 13.9 | 0.72 | 1.1 | 97 | 1.3 | 170 | 81 |
| Comparative Example 5 | -0.02 | 0.00 | 0.07 | Mn, Al | 5.0 | 16.5 | 0.44 | 1.2 | 113 | 1.2 | 175 | 64 |

Examples 1 to 3 satisfied the conditions (1) to (3), and each had an initial discharge capacity of at least 180 mAh/g and a discharge capacity retention rate of at least 80%, indicating a high initial discharge capacity and favorable cycle characteristics. It is thought that this is because by ensuring a specific proportion of cation mixing, volume change upon repeated charging and discharging is suppressed, and any increase in resistance caused by rock salt structures is also suppressed.

Comparative Example 1 had a Me site occupancy exceeding 7.0%, and the initial discharge capacity was low and the cycle characteristics were inferior. It is thought that this is because excessive cation mixing occurred, resulting in increased resistance.

Comparative Example 2 exhibited a value for $(I_B+I_C)/I_A$ that exceeded 0.70, and the cycle characteristics were inferior. It is thought that this is because the proportion of rock salt structures was high, resulting in increased resistance.

Comparative Example 3 had a Me site occupancy of less than 2.0%, and the cycle characteristics were inferior. It is thought that this is due to a smaller inhibitory effect on volume change provided by the cation mixing.

Comparative Example 4 satisfied the conditions (1) and (2), but the value for $(I_B+I_C)/I_A$ exceeded 0.70, and the initial discharge capacity was low. It is thought that this is because the proportion of rock salt structures was high, resulting in increased resistance.

Comparative Example 5 satisfied the conditions (1) and (2), but the value for $(I_B+I_C)/I_A$ was less than 0.45, and the initial discharge capacity was low and the cycle characteristics were inferior. It is thought that this is because the proportion of rock salt structures was low, making structural degradation more likely.

[Reference Signs List]

    1 Separator
    2 Positive electrode
    2a Positive electrode active material layer
    2b Positive electrode current collector
    3 Negative electrode
    4 Electrode group
    5 Battery can
    6 Electrolyte solution
    7 Top insulator
    8 Sealing body
    10 Lithium secondary battery
    21 Positive electrode lead
    31 Negative electrode lead
    41, 42, 51, 52 LiMO
    100 Laminate
    110 Positive electrode
    111 Positive electrode active material layer
    112 Positive electrode current collector
    113 External terminal
    120 Negative electrode
    121 Negative electrode active material layer
    122 Negative electrode current collector
    123 External terminal
    130 Solid electrolyte layer
    200 Exterior case
    200a Opening
    1000 All-solid-state lithium secondary battery

**Claims**

**1.** A lithium metal composite oxide having a layered structure and satisfying (1), (2) and (3) shown below:

(1) represented by a compositional formula (I) shown below:

$$Li[Li_m(Ni_{(1-x-y)}Co_xM_y)_{1-m}]O_2 ... \qquad \text{compositional formula (I)}$$

(wherein in the compositional formula (I), M represents one or more elements selected from the group consisting of Mn, Fe, Cu, Ti, Mg, Ca, Al, Zn, Sn, Zr, B, Si, Nb, W, Ta, Ba, S and P, and the compositional formula (I) satisfies $-0.1 \leq m \leq 0.2$, $0 \leq x \leq 0.5$, $0 < y \leq 0.7$, and $x+y<1$);

(2) Me site occupancy at Li sites of a layered rock salt crystal structure, determined by Rietveld analysis, is at least 2.0% but not more than 7.0%;

(3)

$$0.45 \leq (I_B + I_C)/I_A \leq 0.70$$

(wherein in powder X-ray diffraction measurements using CuK$\alpha$ radiation, $I_A$ is an integrated intensity of a diffraction peak that exists within a range of $2\theta = 35.5 \pm 1°$, $I_B$ is an integrated intensity of a lower angle peak of two diffraction peaks that exist within a range of $2\theta = 38.0 \pm 1°$, and Ic is an integrated intensity of a higher angle peak of the two diffraction peaks).

2. The lithium metal composite oxide according to Claim 1, wherein the compositional formula (I) satisfies $0 \leq x \leq 0.1$.

3. The lithium metal composite oxide according to Claim 1 or 2, having a $D_{50}$ value obtained from a volume-based cumulative particle size distribution curve measured using a laser diffraction and scattering method of at least 3 $\mu$m but not more than 20 $\mu$m.

4. The lithium metal composite oxide according to Claim 1 or 2, which satisfies (4) shown below:

$$(4)\ 0.8 \leq I_D/I_E \leq 1.8$$

(wherein in powder X-ray diffraction measurements using CuK$\alpha$ radiation, $I_D$ is an integrated intensity of a diffraction peak that exists within a range of $2\theta = 18.5 \pm 1°$, and $I_E$ is an integrated intensity of a diffraction peak that exists within a range of $2\theta = 44.5 \pm 1°$).

5. The lithium metal composite oxide according to Claim 1 or 2, wherein an average crystallite size, calculated by Rietveld analysis of a powder X-ray diffraction pattern in a range of $2\theta = 10°$ to $90°$ obtained by powder X-ray diffraction measurement, is at least 80 nm but not more than 200 nm.

6. The lithium metal composite oxide according to Claim 1 or 2, having a BET specific surface area of at least 0.2 m$^2$/g but not more than 2.0 m$^2$/g.

7. A positive electrode active material for a lithium secondary battery comprising the lithium metal composite oxide according to Claim 1 or 2.

8. A positive electrode for a lithium secondary battery comprising the positive electrode active material for a lithium secondary battery according to Claim 7.

9. A lithium secondary battery comprising the positive electrode for a lithium secondary battery according to Claim 8.

FIG. 1

FIG. 2

FIG. 3

FIG. 4

## INTERNATIONAL SEARCH REPORT

| International application No. |
| --- |
| **PCT/JP2023/041791** |

| | |
| --- | --- |
| **A. CLASSIFICATION OF SUBJECT MATTER** | |

*C01G 53/00*(2006.01)i; *H01M 4/505*(2010.01)i; *H01M 4/525*(2010.01)i
FI: C01G53/00 A; H01M4/505; H01M4/525

According to International Patent Classification (IPC) or to both national classification and IPC

**B. FIELDS SEARCHED**

Minimum documentation searched (classification system followed by classification symbols)

C01G53/00; H01M4/505; H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2010-064944 A (SUMITOMO METAL MINING CO., LTD.) 25 March 2010 (2010-03-25) entire text | 1-9 |
| A | WO 2014/061653 A1 (TODA KOGYO CORP.) 24 April 2014 (2014-04-24) entire text | 1-9 |
| A | WO 2014/061654 A1 (TODA KOGYO CORP.) 24 April 2014 (2014-04-24) entire text | 1-9 |
| A | JP 7157219 B1 (SUMITOMO CHEMICAL CO., LTD.) 19 October 2022 (2022-10-19) entire text | 1-9 |
| A | JP 2022-043852 A (SUMITOMO CHEMICAL CO., LTD.) 16 March 2022 (2022-03-16) entire text | 1-9 |
| A | WO 2018/181530 A1 (SUMITOMO CHEMICAL CO., LTD.) 04 October 2018 (2018-10-04) entire text | 1-9 |

☐ Further documents are listed in the continuation of Box C.          ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 January 2024** | **30 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

EP 4 640 635 A1

**INTERNATIONAL SEARCH REPORT**
Information on patent family members

International application No.

**PCT/JP2023/041791**

| Patent document cited in search report | | | Publication date (day/month/year) | Patent family member(s) | | | Publication date (day/month/year) |
|---|---|---|---|---|---|---|---|
| JP | 2010-064944 | A | 25 March 2010 | (Family: none) | | | |
| WO | 2014/061653 | A1 | 24 April 2014 | US entire text | 2015/0249248 | A1 | |
| | | | | EP | 2911224 | A1 | |
| | | | | CN | 104704659 | A | |
| | | | | KR | 10-2015-0073969 | A | |
| WO | 2014/061654 | A1 | 24 April 2014 | US entire text | 2015/0280211 | A1 | |
| | | | | EP | 2910528 | A1 | |
| | | | | CN | 104703921 | A | |
| | | | | KR | 10-2015-0073970 | A | |
| JP | 7157219 | B1 | 19 October 2022 | JP | 2023-22605 | A | |
| | | | | WO | 2023/013494 | A1 | |
| JP | 2022-043852 | A | 16 March 2022 | EP entire text | 4210130 | A1 | |
| | | | | CN | 116097469 | A | |
| | | | | KR | 10-2023-0061359 | A | |
| | | | | JP | 6923730 | B1 | |
| | | | | WO | 2022/050311 | A1 | |
| WO | 2018/181530 | A1 | 04 October 2018 | JP | 2018-172257 | A | |
| | | | | CN | 110461770 | A | |
| | | | | KR | 10-2019-0127756 | A | |

**EP 4 640 635 A1**

**Patent documents cited in the description**

- JP 2022205622 A
- JP 2010064944 A
- JP 2002201028 A

- WO 2022113904 A1
- JP 2004095400 A